# DEMANDE DE BREVET EUROPEEN

(11) **EP 4 209 958 A1**
(43) Date de publication de la demande: **12.07.2023**
(21) Numéro de dépôt: 22216803.1
(22) Date de dépôt: 27.12.2022
(51) Int. Cl.: G06K 7/10, G06K 19/07

(54) **DÉTECTION DE DISPOSITIF NFC**

(30) Priorité: 10.01.2022 FR 2200146
(71) Demandeur: STMICROELECTRONICS SA, 92120 Montrouge (FR); STMicroelectronics (Rousset) SAS, 13790 Rousset (FR); STMicroelectronics razvoj polprevodnikov d.o.o., 1000 Ljubljana (SI)
(72) Inventeur: TRAMONI, Alexandre, 83330 LE BEAUSSET (FR); KOVACIC, Kosta, 2312 OREHOVA VAS (SI); SIBILLE, Florent, 38000 GRENOBLE (FR); CORDIER, Nicolas, 13080 AIX-EN-PROVENCE (FR); TORNAMBE, Anthony, 13790 ROUSSET (FR); RUIZ, Jean Remi, 13850 GREASQUE (FR); JAUNET, Guillaume, 06130 GRASSE (FR)
(74) Mandataire: Cabinet Beaumont

(57) **Abrégé**

La présente description concerne un procédé dans lequel un circuit de communication en champ proche d'un premier dispositif NFC alterne, en mode basse consommation, entre :
- des premières phases (PH1) d'émission de salves de champ ; et
- des deuxièmes phases couvrant toute la durée séparant deux premières phases (PH1) d'émission successives et comportant chacune une troisième phase (PH2) d'activation d'un détecteur de champ :
A) s'étendant pendant toute la deuxième phase ; ou
B) entrecoupée de quatrièmes phases de désactivation du détecteur de champ présentant chacune une durée inférieure à la durée minimale des premières phases (PH1).

## Description

### Domaine technique

La présente description concerne de façon générale les circuits électroniques et, plus particulièrement, les transpondeurs électromagnétiques ou étiquettes électroniques ("tag", en anglais). La présente description s'applique en particulier aux dispositifs électroniques intégrant un circuit de communication en champ proche ("Near-Field Communication" - NFC, en anglais), plus communément appelés dispositifs NFC, et à la détection de la présence d'un tel dispositif dans le champ d'un autre dispositif.

### Technique antérieure

Les systèmes de communication à transpondeurs électromagnétiques sont de plus en plus fréquents, en particulier depuis le développement des technologies de communication en champ proche. Ces systèmes exploitent typiquement un champ électromagnétique radiofréquence généré par un dispositif NFC (terminal ou lecteur) pour détecter puis communiquer avec un autre dispositif NFC (carte) situé à portée.

La plupart du temps, les dispositifs NFC sont alimentés par batterie. Des périodes d'utilisation de leurs fonctions et circuits sont alors généralement entrecoupées de périodes de veille. Les périodes de veille permettent en particulier d'abaisser la consommation énergétique des dispositifs NFC. Un dispositif NFC doit alors être "réveillé" quand il détecte une étiquette électronique ou un autre dispositif à portée. On a cependant intérêt à faire en sorte que les dispositifs NFC restent en veille le plus longtemps possible.

### Résumé de l'invention

Un mode de réalisation réduit tout ou partie des inconvénients des techniques connues de détection de présence d'un dispositif électronique intégrant un circuit de communication en champ proche par un autre dispositif électronique émettant un champ électromagnétique, plus particulièrement pendant les périodes de veille.

Pour cela, un mode de réalisation prévoit un procédé dans lequel un circuit de communication en champ proche d'un premier dispositif NFC alterne, en mode basse consommation, entre :
- des premières phases d'émission de salves de champ ; et
- des deuxièmes phases couvrant toute la durée séparant deux premières phases d'émission successives et comportant chacune une troisième phase d'activation d'un détecteur de champ :
   A) s'étendant pendant toute la deuxième phase ; ou
   B) entrecoupée de quatrièmes phases de désactivation du détecteur de champ présentant chacune une durée inférieure à la durée minimale des premières phases.

Selon un mode de réalisation, dans l'option B), les quatrièmes phases de désactivation du détecteur de champ présentent chacune une durée au moins dix fois inférieure, de préférence au moins cinquante fois inférieure, à la durée de chaque première phase.

Selon un mode de réalisation, le premier dispositif NFC bascule dans un mode de fonctionnement d'émission d'une séquence d'interrogation telle que définie dans les spécifications du NFC Forum lorsque le deuxième dispositif NFC est détecté à portée.

Selon un mode de réalisation, un deuxième dispositif NFC est détecté par le détecteur de champ du premier dispositif NFC pendant l'une des deuxièmes phases.

Selon un mode de réalisation, le deuxième dispositif NFC est détecté par le détecteur de champ du premier dispositif NFC suite à l'émission, par le deuxième dispositif NFC, d'au moins une salve de champ.

Selon un mode de réalisation, la présence du deuxième dispositif NFC à portée est confirmée par l'évaluation, par le circuit de communication en champ proche du premier dispositif NFC, d'une fréquence d'oscillation de ladite au moins une salve de champ émise par le deuxième dispositif NFC.

Selon un mode de réalisation, chaque salve de champ émise par le deuxième dispositif NFC présente une durée égale à environ 60 µs.

Selon un mode de réalisation, le deuxième dispositif NFC est détecté à portée suite à l'émission, par le deuxième dispositif NFC, d'une seule salve de champ.

Selon un mode de réalisation, le deuxième dispositif NFC est détecté à portée suite à l'émission, par le deuxième dispositif NFC, de première et deuxième salves de champ successives.

Selon un mode de réalisation, la présence du deuxième dispositif NFC à portée est confirmée par une estimation d'une durée séparant les première et deuxième salves de champ.

Selon un mode de réalisation, la durée séparant les première et deuxième salves de champ est estimée par un compteur du premier dispositif NFC.

Selon un mode de réalisation, la présence du deuxième dispositif NFC à portée est confirmée par une estimation d'une durée de la deuxième salve de champ.

Selon un mode de réalisation, les premier et deuxième dispositifs NFC sont configurés pour communiquer en mode poste à poste.

Un mode de réalisation prévoit un produit programme d'ordinateur, comportant un support de stockage non transitoire comprenant des instructions adaptées à la mise en oeuvre du procédé tel que décrit.

Un mode de réalisation prévoit un circuit électronique, adapté à la mise en oeuvre du procédé tel que décrit.

Un mode de réalisation prévoit un dispositif électronique comportant un produit programme d'ordinateur tel que décrit ou un circuit électronique tel que décrit.

### Brève description des dessins

Ces caractéristiques et avantages, ainsi que d'autres, seront exposés en détail dans la description suivante de modes de réalisation et modes de mise en oeuvre particuliers faite à titre non limitatif en relation avec les figures jointes parmi lesquelles :
la figure 1 représente, de façon très schématique et sous forme de blocs, un exemple de système de communication en champ proche du type auquel s'appliquent, à titre d'exemple, des modes de réalisation et modes de mise en oeuvre décrits ;
la figure 2 représente, de façon schématique et sous forme de blocs, un exemple de circuit de communication en champ proche ;
la figure 3 est un chronogramme illustrant un exemple de fonctionnement d'un procédé de détection, par un dispositif en mode lecteur et en veille, d'un dispositif en mode carte ;
la figure 4 est un chronogramme illustrant un autre exemple de fonctionnement du procédé de détection, par un dispositif en mode lecteur et en veille, d'un dispositif en mode carte ;
la figure 5 est un chronogramme illustrant un exemple de fonctionnement d'un autre procédé de détection, par un dispositif en mode lecteur et en veille, d'un dispositif en mode carte ;
la figure 6 représente, de façon très schématique et sous forme de blocs, un mode de mise en oeuvre d'un procédé de détection et de validation de la détection, par un dispositif en mode lecteur et en veille, d'un autre dispositif en mode lecteur et en veille ;
la figure 7 illustre, par des chronogrammes, un exemple de fonctionnement du procédé de la figure 6 ;
la figure 8 représente, de façon très schématique et sous forme de blocs, un autre mode de mise en oeuvre d'un procédé de détection et de validation de la détection, par un dispositif en mode lecteur et en veille, d'un autre dispositif en mode lecteur et en veille ;
la figure 9 illustre, par des chronogrammes, un exemple de fonctionnement du procédé de la figure 8 ; et
la figure 10 représente, de façon très schématique et sous forme de blocs, encore un autre mode de mise en oeuvre d'un procédé de détection et de validation de la détection, par un dispositif en mode lecteur et en veille, d'un autre dispositif en mode lecteur et en veille.

### Description des modes de réalisation

De mêmes éléments ont été désignés par de mêmes références dans les différentes figures. En particulier, les éléments structurels et/ou fonctionnels communs aux différents modes de réalisation et modes de mise en oeuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en oeuvre décrits ont été représentés et sont détaillés. En particulier, la génération des signaux radiofréquence et leur interprétation n'ont pas été détaillées, les modes de réalisation et modes de mise en oeuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

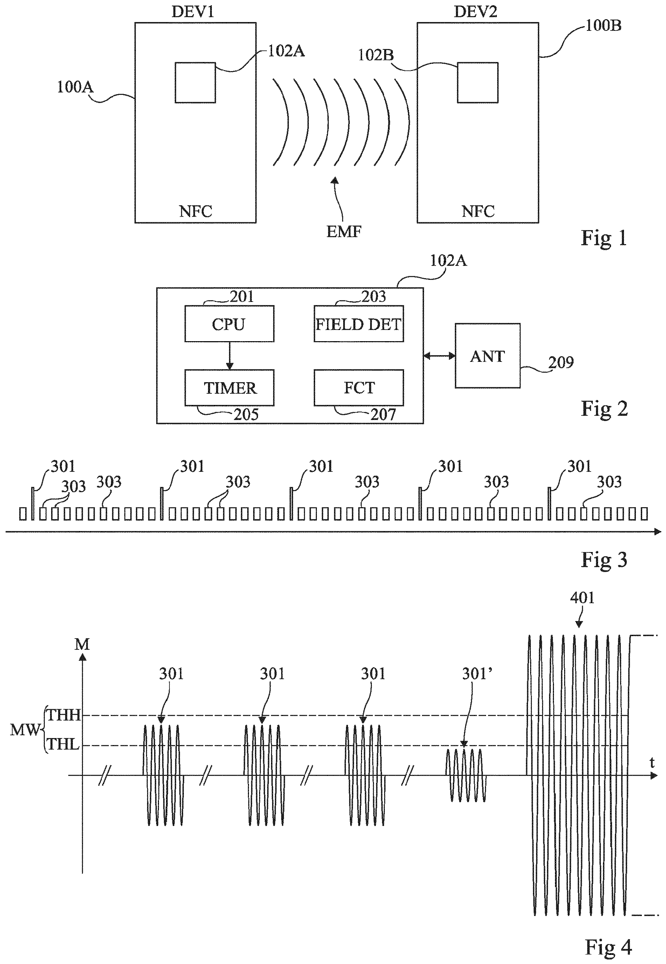

La figure 1 représente, de façon très schématique et sous forme de blocs, un exemple de système de communication en champ proche du type auquel s'appliquent, à titre d'exemple, des modes de réalisation et modes de mise en oeuvre décrits.

On suppose arbitrairement le cas de deux dispositifs électroniques similaires, par exemple deux téléphones mobiles, mais ce qui est décrit s'applique plus généralement à tout système dans lequel un lecteur, borne ou terminal, rayonne un champ électromagnétique susceptible d'être capté par un transpondeur, qu'il s'agisse d'une étiquette électronique ("tag", en anglais), d'une carte à microcircuit ("IC card", en anglais), d'un dispositif plus évolué (un téléphone, par exemple), etc. Pour simplifier, on fera référence à des dispositifs NFC pour désigner des dispositifs électroniques intégrant un ou plusieurs circuits de communication en champ proche ("Near-Field Communication" - NFC, en anglais).

Dans l'exemple représenté, un premier dispositif NFC 100A (DEV1) est susceptible de communiquer, par couplage électromagnétique en champ proche, avec un deuxième dispositif NFC 100B (DEV2). Selon les applications, pour une communication, l'un des dispositifs NFC 100A, 100B fonctionne en mode dit lecteur ("reader/writer mode", en anglais) tandis que l'autre dispositif NFC 100B, 100A fonctionne en mode dit carte ("card émulation mode", en anglais), ou les deux dispositifs NFC 100A et 100B communiquent en mode dit poste à poste ("Peer-to-Peer" - P2P, en anglais).

Chaque dispositif NFC 100A, 100B intègre un circuit de communication en champ proche symbolisé, en figure 1, par un bloc 102A, 102B. Les circuits 102A et 102B de communication en champ proche comportent chacun divers éléments ou circuits électroniques de génération ou de détection d'un signal radiofréquence à l'aide d'une antenne (non représentée), par exemple des circuits de modulation ou de démodulation. Lors d'une communication entre les dispositifs NFC 100A et 100B, le signal radiofréquence généré par l'un des dispositifs NFC 100A, 100B est capté par l'autre dispositif NFC 100B, 100A se trouvant à portée.

En figure 1, on suppose arbitrairement que le premier dispositif NFC 100A émet un champ électromagnétique (EMF) capté par le deuxième dispositif NFC 100B à portée. Il se forme alors un couplage entre deux circuits oscillants, en l'espèce celui de l'antenne du premier dispositif NFC 100A et celui de l'antenne du deuxième dispositif NFC 100B. Ce couplage se traduit par une variation de la charge constituée par les circuits du dispositif NFC 100B sur le circuit oscillant de génération du champ EMF du dispositif NFC 100A.

En pratique, pour établir une communication, une variation de phase ou d'amplitude du champ émis est détectée par le dispositif 100A, qui entame alors un protocole de communication NFC avec le dispositif 100B. Côté dispositif NFC 100A, on détecte en pratique si l'amplitude de la tension aux bornes du circuit oscillant et/ou le déphasage par rapport au signal généré par le circuit 102A sortent de plages (ou fenêtres) d'amplitudes et/ou de phases délimitées chacune par des seuils.

Une fois que le dispositif NFC 100A a détecté la présence du dispositif NFC 100B dans son champ, il entame une procédure d'établissement de communication mettant en oeuvre des émissions de requêtes par le dispositif NFC 100A et de réponses par le dispositif NFC 100B (séquence d'interrogation telle que définie dans les spécifications techniques du NFC Forum). Les circuits du dispositif NFC 100B, s'ils étaient en mode veille, sont alors réactivés.

Lorsqu'un dispositif NFC n'est pas en cours de communication, il est commuté en mode dit basse consommation ("low power", en anglais), ou mode veille, afin de réduire l'énergie consommée. Cela est en particulier le cas pour les dispositifs NFC alimentés par batteries. Dans le mode basse consommation, un dispositif NFC configuré en mode lecteur exécute un mode dit de détection de carte ("Low Power Card Détection" - LPCD, en anglais) également appelé mode de détection d'étiquette ou de tag ("Low Power Tag Détection" - LPTD, en anglais), dans lequel il effectue des boucles de détection d'un autre dispositif se trouvant dans son champ (à portée) afin de sortir d'un mode veille à des fins de communication.

La détection est analogue à celle opérée lorsque le dispositif n'est pas en mode basse consommation. Toutefois, en mode normal, l'émission de la porteuse (du champ) est continue et inclut périodiquement des trames d'interrogation tandis que, en mode veille, l'émission du champ s'effectue par salves ("burst", en anglais) périodiques et sans trame d'interrogation afin de réduire la consommation. Les salves sont d'une durée nettement inférieure (dans un rapport d'au moins dix, de préférence d'au moins cent) à la durée d'une requête d'interrogation d'une carte en mode normal.

Pour simplifier la description qui suit, on considère ce qui se passe au niveau d'un des dispositifs (par exemple le premier dispositif 100A, figure 1). On notera cependant qu'en présence de deux dispositifs 100A et 100B similaires, c'est-à-dire capables de fonctionner à la fois en mode carte et en mode lecteur, par exemple deux téléphones mobiles, le fonctionnement décrit est similaire pour les deux dispositifs. En particulier, les deux dispositifs en mode basse consommation se trouvent en mode de détection de carte (mode LPCD).

La figure 2 représente, de façon schématique et sous forme de blocs, un exemple de réalisation d'un circuit de communication en champ proche, par exemple le circuit 102A du premier dispositif NFC 100A.

Dans l'exemple représenté, le circuit de communication en champ proche 102A comporte une entité de calcul 201 (CPU), par exemple une machine d'états, un microcontrôleur, un microprocesseur, un circuit logique programmable, etc. Dans cet exemple, le circuit 102A comporte en outre un détecteur de champ 203 (FIELD DET). Le détecteur de champ 203 du dispositif NFC 100A est par exemple adapté à détecter un champ électromagnétique rayonné par le dispositif NFC 100B lorsque ce dispositif est situé à portée du dispositif NFC 100A.

Dans l'exemple illustré en figure 2, le circuit de communication en champ proche 102A comporte en outre un compteur 205 (TIMER) commandé par l'entité de calcul 201. Le circuit 102A peut en outre comporter divers autres éléments ou circuits en fonction de l'application, par exemple un générateur de signaux, des convertisseurs analogique-numérique et/ou numérique-analogique, des circuits de modulation et/ou de démodulation, un circuit d'adaptation d'impédance, un circuit de filtrage, etc. Ces éléments et circuits sont symbolisés, en figure 2, par un unique bloc fonctionnel 207 (FCT). Bien que cela n'ait pas été détaillé en figure 2, le circuit de communication en champ proche 102A peut en outre comporter une ou plusieurs zones de stockage volatil et/ou non volatil, un ou plusieurs bus de données, d'adresses et/ou de commandes entre les différents éléments internes au circuit 102B et une ou plusieurs interfaces d'entrée-sortie de communication avec l'extérieur du circuit 102A.

Dans l'exemple représenté, le circuit 102A est connecté à une antenne 209 (ANT) d'émission et de réception de signaux radiofréquence, l'antenne 209 étant notamment adaptée à émettre le champ électromagnétique EMF.

Le circuit de communication en champ proche 102B du deuxième dispositif NFC 100B est par exemple identique ou similaire au circuit de communication en champ proche 102A du premier dispositif NFC 100A.

La figure 3 est un chronogramme illustrant un exemple de fonctionnement d'un procédé de détection, par un dispositif en mode lecteur et en veille, par exemple le dispositif NFC 100A, d'un dispositif en mode carte, par exemple le dispositif NFC 100B.

Lorsqu'il est en mode veille, le dispositif NFC 100A, qui cherche à détecter la présence du dispositif NFC 100B à portée, émet périodiquement une salve de champ 301. La salve de détection 301 ne comporte généralement qu'une porteuse, typiquement à 13,56 MHz, sans modulation. Chaque salve 301 inclut donc un train d'impulsions à la fréquence de 13,56 MHz. Chaque salve 301 présente une durée relativement courte par rapport à un intervalle entre deux salves 301, de préférence dans un rapport d'au moins cent. L'intervalle entre deux salves 301 dépend des dispositifs, mais est généralement de quelques centaines de millisecondes, par exemple, la fréquence des salves 301 en mode LPCD est de l'ordre de quelques hertz, par exemple de l'ordre de 3 ou 4 Hz. La durée d'une salve 301 est de l'ordre de la dizaine ou de la centaine de microsecondes, par exemple égale à environ 30 µs.

À titre d'exemple, le dispositif 100A sort du mode veille temporairement et périodiquement pour émettre les salves 301. En général, on préfère toutefois utiliser une machine d'états pour l'émission de salves 301 en mode basse consommation. Cela évite de réveiller un microcontrôleur, par exemple l'entité de calcul 201, du dispositif NFC 100A et permet ainsi de rester en mode veille.

Entre les salves de champ 301, le dispositif NFC 100A cherche à détecter un champ électromagnétique émis par un dispositif NFC situé à portée, par exemple le dispositif NFC 100B. Dans l'exemple représenté, le dispositif NFC 100A active, à plusieurs reprises, le détecteur de champ 203 du circuit d'émission en champ proche 102A entre deux salves de champ 301 successives. Les phases d'activation du détecteur de champ 203 sont symbolisées, en figure 3, par des blocs 303. Chaque phase 303 d'activation du détecteur de champ 203 présente une durée de l'ordre de la dizaine de microsecondes, par exemple égale à environ 50 µs. Les phases 303 d'activation du détecteur de champ 203 sont par exemple répétées périodiquement à une fréquence de l'ordre du kilohertz, par exemple égale à environ 1 kHz. Afin notamment de réduire la consommation énergétique du dispositif 100A, le détecteur de champ 203 est désactivé entre les phases 303. Par conséquent, si un champ susceptible d'être capté par le dispositif 100A est émis pendant une période séparant deux phases 303 successives, ce champ n'est pas détecté par le détecteur 203 et le microcontrôleur 201 n'est pas réveillé.

La figure 4 est un chronogramme illustrant un autre exemple de fonctionnement du procédé de détection, par un dispositif en mode lecteur et en mode veille, par exemple le premier dispositif NFC 100A, d'un dispositif en mode carte, par exemple le deuxième dispositif NFC 100B. La figure 4 illustre plus particulièrement, de façon très schématique, un exemple d'allure d'évolution, en fonction du temps t (en abscisse), d'une amplitude M (en ordonnée) d'un signal aux bornes du circuit oscillant du dispositif NFC 100A opérant en mode lecteur.

Dans cet exemple, le dispositif NFC 100A, qui cherche à détecter la présence du dispositif NFC 100B à portée, émet périodiquement les salves de champ 301. Quand le dispositif 100B se trouve dans le champ et modifie la charge du circuit oscillant du dispositif émetteur 100A, cela se traduit par une variation d'une grandeur caractéristique d'un signal aux bornes du circuit oscillant lors d'une salve 301' correspondante. En pratique, la modification de la charge du circuit oscillant du dispositif émetteur 100A se traduit par une variation d'amplitude et/ou de phase du signal aux bornes du circuit oscillant lors de la salve 301'.

Les variations d'amplitude et/ou de phase sont par exemple détectées par des variations de signaux en phase (I) et en quadrature de phase (Q) fournis par un détecteur en bande de base mesurant le signal aux bornes du circuit oscillant. Ces signaux I et Q représentent des grandeurs caractéristiques du signal aux bornes du circuit oscillant.

Dans l'exemple de la figure 4, on suppose arbitrairement que la présence du dispositif 100B provoque une baisse d'amplitude (salve 301'). Toutefois, la présence du dispositif 100B peut, selon les cas, également se traduire par une augmentation de l'amplitude. Il en est de même pour le déphasage par rapport au signal émis.

Dans l'exemple représenté en figure 4, si la variation d'amplitude M est suffisante pour sortir d'une fenêtre ou plage MW d'amplitudes, délimitée par un seuil inférieur THL (ou seuil bas) et par un seuil supérieur THH (ou seuil haut), ou pour sortir d'une plage ou fenêtre de phases non représentée, notée PW, le dispositif émetteur 100A est activé (quitte le mode basse consommation). Il se met à émettre le champ avec des trames 401 d'interrogation ("polling", en anglais) d'une communication. Ces trames sont normalisées (elles répondent aux spécifications techniques du NFC Forum) et sont fonction de protocoles de communication supportés par le lecteur 100A (typiquement des requêtes A, B, F, V telles que décrites dans la boucle d'interrogation standard de la norme NFC Forum). La durée d'émission d'une trame est généralement de l'ordre de quelques millisecondes à quelques dizaines de millisecondes.

Si un dispositif configuré en mode carte, par exemple, le dispositif récepteur 100B (en mode carte), est bien présent, ce dispositif répond alors selon la requête du protocole qu'il supporte et la communication démarre. Lorsque la communication est terminée, ou lorsque le dispositif récepteur 100B sort du champ, le dispositif émetteur 100A repasse en mode basse consommation au bout d'un certain temps (de l'ordre de la seconde) afin de réduire sa consommation. Il se remet alors à émettre périodiquement des salves 301 de détection sans requête de communication.

En revanche, si aucun dispositif configuré en mode carte n'est présent, à portée, au moment où le dispositif 100A est activé après avoir considéré qu'il a détecté une carte, la communication ne peut pas s'établir. Le dispositif émetteur 100A repasse, par exemple, en mode basse consommation au bout d'un certain temps (de l'ordre de la seconde) afin de réduire sa consommation énergétique. Il se remet alors à émettre périodiquement des salves 301 de détection sans requête de communication.

Un inconvénient du procédé exposé ci-dessus en relation avec les figures 3 et 4 tient au fait que la détection du dispositif NFC 100B par le dispositif NFC 100A s'effectue lorsque ces dispositifs sont séparés par une distance très faible, inférieure à quelques centimètres, par exemple inférieure à 2,5 cm. La distance à partir de laquelle le dispositif NFC 100A peut détecter le dispositif NFC 100B situé à portée est en particulier inférieure à une distance maximale entre les dispositifs NFC 100A et 100B lors de phases de communication postérieures à la détection. Il en résulte une mauvaise expérience utilisateur.

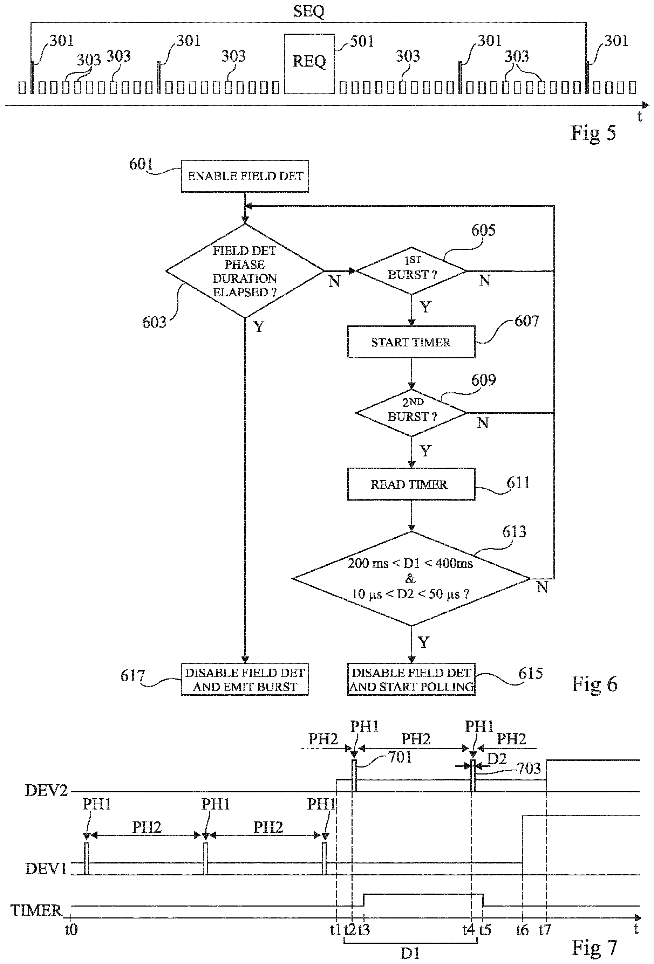

La figure 5 est un chronogramme illustrant un exemple de fonctionnement d'un autre procédé de détection, par un dispositif en mode lecteur et en veille, d'un dispositif en mode carte.

Le procédé de la figure 5 comporte des éléments communs avec le procédé de la figure 3. Ces éléments communs ne seront pas à nouveau décrits ci-après. Le procédé de la figure 5 diffère du procédé de la figure 3 en ce que, dans le procédé de la figure 5, une salve de champ 301 est remplacée, à chaque séquence SEQ périodique du mode LPCD, par une trame d'interrogation 501. La trame d'interrogation 501 est par exemple analogue à la trame d'interrogation 401 précédemment décrite en relation avec la figure 4. La trame 501 comprend par exemple une requête A (REQ) telle que décrite dans la norme NFC Forum. La séquence SEQ présente par exemple une durée égale à environ 1 s, la trame 501 étant dans ce cas émise une fois par seconde environ.

L'émission de la trame d'interrogation 501 permet au dispositif NFC 100A de détecter plus facilement le dispositif NFC 100B situé à portée. Cela permet notamment une détection lorsque les deux dispositifs 100A et 100B sont séparés par une distance proche de la distance maximale de communication entre ces deux dispositifs. Toutefois, un inconvénient lié à l'émission de la trame 501 est que cela nécessite d'émettre à pleine puissance pendant une durée égale à environ 10 ms toutes les secondes environ. Il en résulte une consommation énergétique plus importante du dispositif NFC 100A, par exemple comprise entre 1 et 5 mA, ce qui nuit à son autonomie.

Les procédés décrits ci-dessus en relation avec les figures 3 à 5 sont transposables au cas où les dispositifs NFC 100A et 100B sont tous deux en mode lecteur et cherchent à se détecter mutuellement, par exemple pour établir une communication en mode poste à poste (P2P). Ces procédés présentent, dans ce cas, des inconvénients similaires à ceux décrits précédemment.

La figure 6 représente, de façon très schématique et sous forme de blocs, un mode de mise en oeuvre d'un procédé de détection et de validation de la détection, par un dispositif en mode lecteur et en veille, par exemple le dispositif NFC 100A, d'un autre dispositif en mode lecteur et en veille, par exemple le dispositif NFC 100B.

Selon ce mode de mise en oeuvre, le circuit de communication en champ proche 102A du dispositif NFC 100A alterne, en mode basse consommation, entre :
- des premières phases d'émission de salves de champ ; et
- des deuxièmes phases couvrant toute la durée séparant deux premières phases d'émission successives et comportant chacune une troisième phase (PH2) d'activation d'un détecteur de champ (203) s'étendant pendant toute la deuxième phase.

Plus précisément, le procédé débute par une étape 601 (ENABLE FIELD DET) d'activation du détecteur de champ 203 du circuit de communication en champ proche 102A du dispositif NFC 100A. Cela permet au dispositif NFC 100A d'être en mesure de détecter un éventuel champ électromagnétique rayonné par un autre dispositif, par exemple le dispositif NFC 100B, situé à portée. On débute ainsi une deuxième phase d'activation du détecteur de champ 203, par exemple consécutive à une première phase d'émission de salves de champ.

À une autre étape 603 (FIELD DET PHASE DURATION ELAPSED?), postérieure à l'étape 601, on contrôle si la durée de la deuxième phase de détection de champ est écoulée. Tant que la durée de la deuxième phase n'est pas écoulée, c'est-à-dire jusqu'à la première phase d'émission de salves de champ suivante, le détecteur de champ 203 reste activé.

Tant que la durée de la deuxième phase de détection de champ n'est pas écoulée (sortie N du bloc 603), on tente, à une autre étape 605 (1^{ST} BURST?), de détecter une première salve de champ émise par le dispositif NFC 100B en mode lecteur. Dans le cas où une première salve de champ est détectée par le détecteur de champ 203 du dispositif NFC 100A (sortie Y du bloc 605), on démarre le compteur 205 du circuit de communication en champ proche 102A du dispositif NFC 100A à une étape postérieure 607 (START TIMER). En revanche, si aucune salve de champ n'est détectée (sortie N du bloc 605), on revient à l'étape 603 de contrôle de l'écoulement de la durée de la deuxième phase de détection de champ.

Après avoir démarré le compteur à l'étape 607, le dispositif NFC 100A tente, à une autre étape 609 (2^{ND} BURST?), de détecter une deuxième salve de champ potentiellement émise par le dispositif NFC 100B. Dans le cas où une deuxième salve de champ est détectée par le détecteur de champ 203 du dispositif NFC 100A (sortie Y du bloc 609), on lit la valeur du compteur 205 à une étape postérieure 611 (READ TIMER). En revanche, si le dispositif NFC 100A ne détecte pas de deuxième salve de champ (sortie N du bloc 609) au bout d'une durée par exemple égale à environ 400 ms, on revient à l'étape 603 de contrôle de l'écoulement de la durée de la deuxième phase de détection de champ.

À une étape 613 (200 ms < D1 < 400 ms & 10 µs < D2 < 50 µs?) postérieure à l'étape 611, on contrôle une première durée D1 séparant les première et deuxième salves de champ, détectées respectivement aux étapes 605 et 609, et une deuxième durée D2 séparant le début et la fin de la deuxième salve de champ. Plus précisément, dans l'exemple représenté, on vérifie que la première durée D1 est comprise dans un premier intervalle, par exemple entre 200 et 400 ms, et que la deuxième durée D2 est comprise dans un deuxième intervalle, par exemple entre 10 et 50 µs. Dans le cas où les première et deuxième durées D1 et D2 sont comprises respectivement dans les premier et deuxième intervalles (sortie Y du bloc 613), on considère que la présence du dispositif NFC 100B en mode LPCD et à portée est confirmée et on passe alors à une étape 615 (DISABLE FIELD DET AND START POLLING) pendant laquelle le dispositif NFC 100A désactive le détecteur de champ 203 puis émet une trame d'interrogation, par exemple analogue aux trames 401 et 501. En revanche, si au moins l'une des première et deuxième durées D1 et D2 n'est pas comprise respectivement dans l'intervalle prévu (sortie N du bloc 613), on considère que la présence du dispositif NFC 100B en mode LPCD et à portée n'est pas confirmée et on revient alors à l'étape 603 de contrôle de l'écoulement de la durée de la phase de détection de champ. En variante, on pourrait prévoir de ne contrôler qu'une seule durée parmi les durées D1 et D2.

Dans le cas où la détection d'aucun dispositif NFC n'est validée durant la deuxième phase de détection de champ (sortie Y du bloc 603), on passe alors à une étape 617 (DISABLE FIELD DET AND EMIT BURST) correspondant au début d'une première phase pendant laquelle le dispositif NFC 100A désactive le détecteur de champ 203 puis émet une salve de champ. Une fois la salve de champ émise, on revient par exemple à l'étape 601.

La figure 7 illustre, par des chronogrammes, un exemple de fonctionnement du procédé de la figure 6.

Entre un instant t0 et un instant t1, postérieur à l'instant t0, le dispositif NFC 100A (DEV1) alterne, en mode LPCD, entre les premières phases (PH1) d'émission de salves de champ et les troisièmes phases (PH2) d'activation du détecteur de champ 203. Dans cet exemple, le détecteur de champ 203 demeure activé en permanence pendant toute la durée de chaque deuxième phase PH2, c'est-à-dire entre deux premières phases PH1 successives.

À l'instant t1, le dispositif NFC 100B en mode LPCD, qui alterne par exemple lui aussi entre les premières phases PH1 d'émission de salves de champ et les troisièmes phases PH2 d'activation de son détecteur de champ, est placé à portée du dispositif NFC 100A. À l'instant t1, les dispositifs NFC 100A et 100B sont tous deux dans la deuxième phase PH2.

À un instant t2, postérieur à l'instant t1, le dispositif NFC 100B émet, au cours d'une phase PH1, une première salve de champ 701. La première salve 701 est détectée par le dispositif NFC 100A. Cela provoque par exemple le réveil de l'unité de calcul 201 et le déclenchement du compteur (TIMER) à un instant t3, postérieur à l'instant t2. À partir de l'instant t3, les phases PH1 d'émission de salves de champ par le dispositif NFC 100A sont temporairement suspendues et le détecteur de champ 203 du dispositif NFC 100A est maintenu activé pendant une durée suffisante pour permettre de détecter une éventuelle salve de champ consécutive à la première salve de champ 701. À titre d'exemple, le détecteur de champ 203 du dispositif NFC 100A est maintenu activé pendant une durée égale à environ 0,4 s à compter de l'instant t3.

À un instant t4, postérieur à l'instant t3, le dispositif NFC 100B émet, au cours d'une autre première phase PH1, une deuxième salve de champ 703. La deuxième salve 703 est détectée par le dispositif NFC 100A, qui stoppe le compteur TIMER à un instant t5, postérieur à l'instant t4. Le dispositif NFC 100A évalue alors la durée D1 séparant la première salve de champ 701 de la deuxième salve de champ 703, et la durée D2 de la deuxième salve de champ 703. En pratique, la durée D1 entre les première et deuxième salves 701 et 703 est par exemple estimée par le compteur TIMER en évaluant la durée séparant les instants t3 et t4, l'instant t3 de déclenchement du compteur étant très proche de l'instant t2 de détection de la première salve 701 par le dispositif NFC 100A. À titre de variante, on pourrait prévoir d'accroître la précision de l'estimation de la durée D1 en ajoutant, à la durée évaluée par le compteur TIMER, une durée estimative de la phase de réveil de l'unité de calcul 201, c'est-à-dire de la durée séparant les instants t2 et t3. La durée D2 peut être évaluée par le compteur TIMER ou par un autre compteur du dispositif NFC 100A.

À un instant t6, postérieur à l'instant t5, le dispositif NFC 100A désactive le détecteur de champ 203 puis émet une trame d'interrogation, par exemple une trame comportant des requêtes A, B, F, V telles que décrites dans la boucle d'interrogation standard de la norme NFC Forum.

À un instant t7, postérieur à l'instant t6, le dispositif NFC 100B répond au dispositif NFC 100A et la communication entre les dispositifs 100A et 100B peut alors être considérée comme établie.

On a décrit ci-dessus un mode de mise en oeuvre dans lequel la détection du dispositif NFC 100B par le dispositif NFC 100A est validée après réception, par le dispositif NFC 100A, de deux salves de champ successives 701 et 703 émises par le dispositif NFC 100B. À titre de variante, on pourrait prévoir d'omettre la validation. Plus précisément, on pourrait par exemple prévoir que le dispositif NFC 100A émette une trame d'interrogation sans attendre la deuxième salve 703, par exemple dès l'instant t3. Dans ce cas, on pourrait omettre les étapes de déclenchement et de lecture du compteur TIMER. Toutefois, le fait de prévoir une validation à l'issue de la deuxième salve 703 permet avantageusement d'éviter d'émettre une trame d'interrogation suite, par exemple, à la détection à l'instant t2 d'une perturbation ne correspondant pas à la présence d'un dispositif NFC à portée. On évite ainsi une consommation énergétique indésirable.

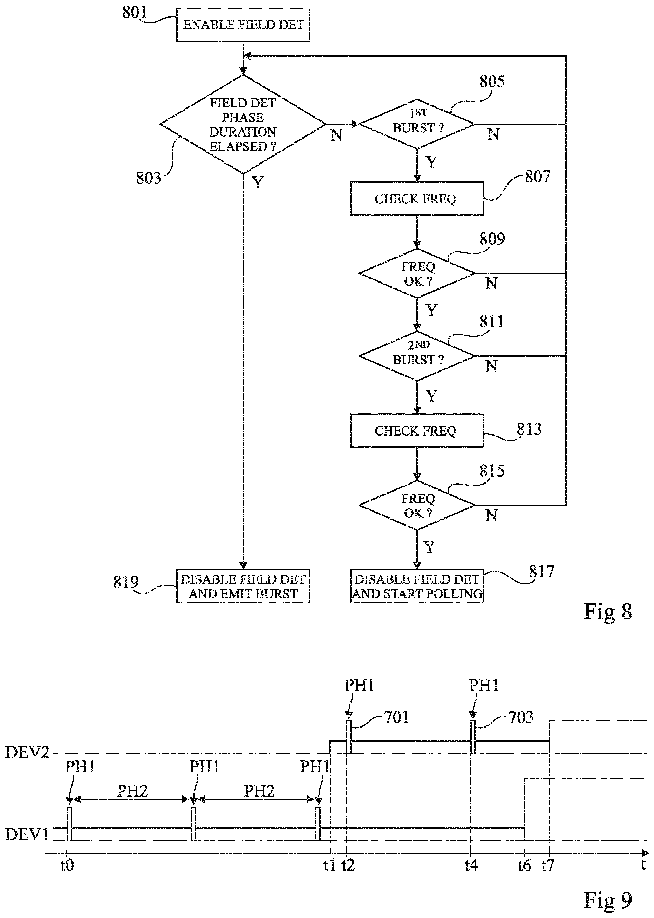

La figure 8 représente, de façon très schématique et sous forme de blocs, un autre mode de mise en oeuvre d'un procédé de détection, par un dispositif en mode lecteur et en veille, par exemple le dispositif NFC 100A, d'un autre dispositif en mode lecteur et en veille, par exemple le dispositif NFC 100B.

Selon ce mode de mise en oeuvre, les salves de champ respectivement émises par les premier et deuxième dispositifs NFC 100A et 100B pendant les premières phases PH1 présentent une durée plus longue que dans le mode de mise en oeuvre précédemment exposé en relation avec les figures 6 et 7. Les salves de champ présentent par exemple chacune, dans le mode de mise en oeuvre de la figure 8, une durée deux fois plus importante que dans le mode de mise en oeuvre des figures 6 et 7, par exemple égale à environ 60 µs. Cela permet, comme exposé plus en détail ci-dessous, d'estimer la fréquence d'oscillation des salves de champ.

Dans l'exemple illustré en figure 8, le procédé débute par une étape 801 (ENABLE FIELD DET) d'activation du détecteur de champ 203 du circuit de communication en champ proche 102A du dispositif NFC 100A. Cela permet au dispositif 100A d'être en mesure de détecter un éventuel champ électromagnétique rayonné par un autre dispositif, par exemple le dispositif NFC 100B, situé à portée.

À une autre étape 803 (FIELD DET PHASE DURATION ELAPSED?), postérieure à l'étape 801, on vérifie si la durée d'une phase de détection de champ PH2 est écoulée. La phase de détection de champ PH2 correspond à la phase couvrant toute la durée séparant deux phases successives d'émission de salves de champ. Tant que cette durée n'est pas écoulée, le détecteur de champ 203 reste activé.

Tant que la durée de la phase de détection de champ PH2 n'est pas écoulée (sortie N du bloc 803), on tente, à une autre étape 805 (1^{ST} BURST?), de détecter une première salve de champ émise par le dispositif NFC 100B. Dans le cas où une première salve de champ est détectée par le détecteur de champ 203 du dispositif NFC 100A (sortie Y du bloc 805), on évalue la fréquence d'oscillation de la première salve de champ à une étape ultérieure 807 (CHECK FREQ). En revanche, si aucune salve de champ n'est détectée (sortie N du bloc 805), on revient à l'étape 803 de contrôle de l'écoulement de la durée de la phase PH2 de détection de champ.

À une étape 809 (FREQ OK?) postérieure à l'étape 807 d'évaluation de la fréquence d'oscillation de la première salve de champ, on contrôle si cette fréquence est de l'ordre de la fréquence d'une salve de détection susceptible d'être émise par le dispositif NFC 100B, par exemple égale à environ 13,56 MHz. Dans ce cas, on tente, à une étape 811 (2^{ND} BURST?), de détecter une deuxième salve de champ émise par le dispositif NFC 100B. En revanche, si la fréquence mesurée ne correspond pas à la fréquence attendue (sortie N du bloc 809), on revient à l'étape 803 de contrôle de l'écoulement de la durée de la phase PH2 de détection de champ.

Dans le cas où une deuxième salve de champ est détectée par le détecteur de champ 203 du dispositif NFC 100A (sortie Y du bloc 811), on évalue la fréquence d'oscillation de la deuxième salve de champ à une étape ultérieure 813 (CHECK FREQ). En revanche, si la deuxième salve de champ n'est pas détectée (sortie N du bloc 811) au bout d'une durée par exemple égale à environ 400 ms, on revient à l'étape 803 de contrôle de l'écoulement de la durée de la phase PH2 de détection de champ.

À une étape 815 (FREQ OK?) postérieure à l'étape 813 d'évaluation d'une deuxième fréquence d'oscillation de la deuxième salve de champ, on contrôle si la deuxième fréquence est de l'ordre de la fréquence d'une salve de détection susceptible d'être émise par le dispositif NFC 100B, par exemple égale à environ 13,56 MHz. Dans le cas où les première et deuxième fréquences correspondent aux fréquences attendues, on considère que la présence du dispositif NFC 100B en mode LPCD et à portée est confirmée et on passe alors à une étape 817 (DISABLE FIELD DET AND START POLLING) pendant laquelle le dispositif NFC 100A désactive le détecteur de champ 203 puis émet une trame d'interrogation. En revanche, si au moins l'une des première et deuxième fréquences ne correspond pas à la fréquence attendue (sortie N du bloc 815), on considère que la présence du dispositif 100B en mode LPCD et à portée n'est pas confirmée et on revient alors par exemple à l'étape 803 de contrôle de l'écoulement de la durée de la phase de détection de champ.

Dans le cas où la détection d'aucun dispositif NFC n'est validée durant la phase de détection de champ (sortie Y du bloc 803), on passe alors à une étape 819 (DISABLE FIELD DET AND EMIT BURST) pendant laquelle le dispositif NFC 100A désactive le détecteur de champ 203 puis émet une salve de champ.

Les étapes 801, 803, 805, 811, 817 et 819 du procédé de la figure 8 sont par exemple identiques ou similaires aux étapes 601, 603, 605, 609, 615 et 617, respectivement, du procédé de la figure 6.

La figure 9 illustre, par des chronogrammes, un exemple de fonctionnement du procédé de la figure 8. Les chronogrammes de la figure 9 comprennent des éléments communs avec les chronogrammes de la figure 7. Ces éléments communs ne seront pas décrits à nouveau ci-après.

Le chronogramme de la figure 9 diffère du chronogramme de la figure 7 principalement en ce que, dans le chronogramme de la figure 9, les instants t3 et t5 de déclenchement et d'arrêt du compteur sont omis. En outre, dans le chronogramme de la figure 9, les salves de champ respectivement émises par les premier et deuxième dispositifs pendant les phases PH1 présentent une durée plus importante que les salves de champ émises pendant les phases PH1 du chronogramme de la figure 7.

On a décrit ci-dessus un mode de mise en oeuvre dans lequel la détection du dispositif NFC 100B par le dispositif NFC 100A est validée après réception, par le dispositif NFC 100A, de deux salves de champ successives 701 et 703 émises par le dispositif NFC 100B et contrôle de la fréquence d'oscillation de ces salves de champ. À titre de variante, on pourrait prévoir d'omettre le contrôle de la fréquence d'oscillation de la deuxième salve de champ 703. En outre, on pourrait par exemple prévoir que le dispositif NFC 100A émette une trame d'interrogation sans attendre la deuxième salve 703, par exemple dès que la fréquence d'oscillation de la première salve 701 est vérifiée. Toutefois, le fait de prévoir une validation à l'issue de la deuxième salve 703 permet avantageusement d'éviter d'émettre une trame d'interrogation suite, par exemple, à la détection à l'instant t2 d'une perturbation ne correspondant pas à la présence d'un dispositif NFC à portée. On évite ainsi une consommation énergétique indésirable.

On a décrit ci-dessus en relation avec les figures 6 à 9 des modes de mise en oeuvre dans lesquels les troisièmes phases PH2 d'activation du détecteur de champ 203 couvrent la totalité de la durée séparant deux premières phases PH1 d'émission de salves de champ successives.

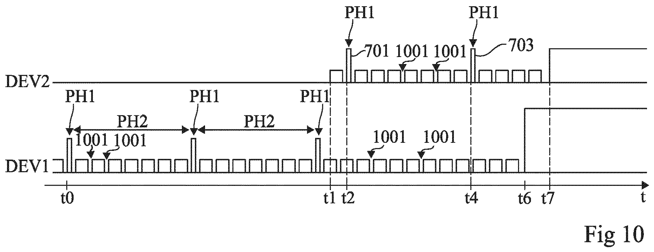

La figure 10 représente, de façon très schématique et sous forme de blocs, encore un autre mode de mise en oeuvre d'un procédé de détection et de validation de la détection, par un dispositif en mode lecteur et en veille, d'un autre dispositif en mode lecteur et en veille.

Le procédé de la figure 10 diffère des procédés des figures 6 à 9 en ce que, selon le mode de mise en oeuvre illustré en figure 10, chaque troisième phase PH2 d'activation du détecteur de champ 203 s'étendant entre deux premières phases PH1 d'émission successives est entrecoupée de quatrièmes phases 1001 de désactivation du détecteur de champ 203. Selon un mode de réalisation, chaque quatrième phase 1001 de désactivation du détecteur de champ 203 présente dans ce cas une durée inférieure à la durée minimale des phases PH1 d'émission, de préférence dix fois inférieure, plus préférentiellement cinquante fois inférieure à la durée minimale des phases PH1. À titre d'exemple, chaque phase 1001 présente une durée égale à environ 1 µs. On peut prévoir, comme illustré en figure 10, que les phases 1001 de désactivation du détecteur de champ 203 soient répétées périodiquement entre les phases PH1 d'émission de salves de champ.

Le mode de mise en oeuvre exposé en relation avec la figure 10 procure des avantages identiques ou similaires à ceux exposés précédemment en relation avec les figures 6 à 9 tout en permettant de réduire encore davantage la consommation énergétique du dispositif NFC 100A.

À titre d'exemple, le circuit de communication en champ proche 102A du dispositif NFC 100A peut comprendre un produit programme d'ordinateur, comportant un support de stockage non transitoire comprenant des instructions adaptées à la mise en oeuvre du procédé des figures 6 et 7, du procédé des figures 8 et 9, ou du procédé de la figure 10.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le mode de mise en oeuvre décrit en relation avec les figures 6 et 7 est combinable avec le mode de mise en oeuvre décrit en relation avec les figures 8 et 9. On pourrait plus précisément prévoir, dans le mode de mise en oeuvre des figures 8 et 9 ou dans le mode de mise en oeuvre de la figure 10, une vérification de la détection du dispositif NFC 100B par un contrôle de durée entre les première et deuxième salves 701 et 703 et/ou un contrôle de durée de la deuxième salve 703.

Enfin, la mise en oeuvre pratique des modes de réalisation et variantes décrits est à la portée de la personne du métier à partir des indications fonctionnelles données ci-dessus.

## Revendications

1. Procédé dans lequel un circuit de communication en champ proche (102A) d'un premier dispositif NFC (100A) alterne, en mode basse consommation, entre :
- des premières phases (PH1) d'émission de salves de champ ; et
- des deuxièmes phases couvrant toute la durée séparant deux premières phases (PH1) d'émission successives et comportant chacune une troisième phase (PH2) d'activation d'un détecteur de champ (203) :
A) s'étendant pendant toute la deuxième phase ; ou
B) entrecoupée de quatrièmes phases (1001) de désactivation du détecteur de champ (203) présentant chacune une durée inférieure à la durée minimale des premières phases (PH1).

2. Procédé selon la revendication 1 dans son option B), dans lequel les quatrièmes phases (1001) de désactivation du détecteur de champ (203) présentent chacune une durée au moins dix fois inférieure, de préférence au moins cinquante fois inférieure, à la durée de chaque première phase (PH1).

3. Procédé selon la revendication 1 ou 2, dans lequel le premier dispositif NFC (100A) bascule dans un mode de fonctionnement d'émission d'une séquence d'interrogation lorsqu'un deuxième dispositif NFC (100B) est détecté à portée.

4. Procédé selon l'une quelconque des revendications 1 à 3, dans lequel un ou le deuxième dispositif NFC (100B) est détecté par le détecteur de champ (102A) du premier dispositif NFC (100A) pendant l'une des deuxièmes phases.

5. Procédé selon la revendication 4, dans lequel le deuxième dispositif NFC (100B) est détecté par le détecteur de champ (203) du premier dispositif NFC (100A) suite à l'émission, par le deuxième dispositif NFC (100B), d'au moins une salve de champ (701, 703).

6. Procédé selon la revendication 5, dans lequel la présence du deuxième dispositif NFC (100B) à portée est confirmée par l'évaluation, par le circuit de communication en champ proche (102A) du premier dispositif NFC (100A), d'une fréquence d'oscillation de ladite au moins une salve de champ (701, 703) émise par le deuxième dispositif NFC (100B).

7. Procédé selon la revendication 6, dans lequel chaque salve de champ (701, 703) émise par le deuxième dispositif NFC (100B) présente une durée (D2) égale à environ 60 µs.

8. Procédé selon l'une quelconque des revendications 5 à 7, dans lequel le deuxième dispositif NFC (100B) est détecté à portée suite à l'émission, par le deuxième dispositif NFC (100B), d'une seule salve de champ (701).

9. Procédé selon l'une quelconque des revendications 5 à 7, dans lequel le deuxième dispositif NFC (100B) est détecté à portée suite à l'émission, par le deuxième dispositif NFC (100B), de première et deuxième salves de champ successives (701, 703).

10. Procédé selon la revendication 9, dans lequel la présence du deuxième dispositif NFC (100B) à portée est confirmée par une estimation d'une durée (D1) séparant les première et deuxième salves de champ (701, 703).

11. Procédé selon la revendication 10, dans lequel la durée (D1) séparant les première et deuxième salves de champ (701, 703) est estimée par un compteur (205) du premier dispositif NFC (100A).

12. Procédé selon la revendication 10 ou 11, dans lequel la présence du deuxième dispositif NFC (100B) à portée est confirmée par une estimation d'une durée (D2) de la deuxième salve de champ (703).

13. Procédé selon l'une quelconque des revendications 3 à 12, dans lequel les premier et deuxième dispositifs NFC (100A, 100B) sont configurés pour communiquer en mode poste à poste.

14. Programme d'ordinateur comprenant des instructions de code de programme pour l'exécution des étapes du procédé selon l'une quelconque des revendications 1 à 13 lorsque ledit programme est exécuté sur un ordinateur.

15. Circuit électronique (102A), adapté à la mise en oeuvre du procédé selon l'une quelconque des revendications 1 à 13.

16. Dispositif électronique (100A, 100B) comportant un produit programme d'ordinateur selon la revendication 14 ou un circuit électronique (102A) selon la revendication 15.
